# EUROPÄISCHE PATENTANMELDUNG

(11) **EP 3 971 464 A1**
(43) Veröffentlichungstag der Anmeldung: **23.03.2022**
(21) Anmeldenummer: 20197154.6
(22) Anmeldetag: 21.09.2020
(51) Int. Cl.: F16M 11/04, F16M 11/42, F16M 11/18, F16M 11/24, F16M 11/10, F16M 11/20

(54) **KAMERAWAGEN UND KAMERABEWEGUNGSSYSTEM**

(71) Anmelder: M. Schäfer Vermietung und Verwaltung, 67808 Schweisweiler (DE)
(72) Erfinder: Pfleger, Daniel, 67681 Sembach (DE)
(74) Vertreter: Patentanwälte Dr. Keller, Schwertfeger Partnerschaft mbB

(57) **Zusammenfassung**

Die vorliegenden Erfindung betrifft einen Kamerawagen (12; 200), umfassend eine fahrbare Plattform (18) mit Rädern (20), eine auf der Plattform (18) montierte Kamera (22) und eine Kommunikationseinheit (24), wobei die fahrbare Plattform (18) fernsteuerbar ist und wobei ein nach unten weisender Magnetsensor (36) vorgesehen ist, der ausgelegt ist, eine magnetische Spur zu erkennen, sowie ein Kamerabewegungssystem mit einem solchen Kamerawagen (12; 200).

## Beschreibung

Die vorliegende Erfindung betrifft einen Kamerawagen bzw. ein Kamerabewegungssystem.

Kamerawagen werden im Bereich von Film und Fernsehen üblicherweise eingesetzt, um während Film- und Fernsehaufzeichnungen Szenen wunschgenau und störungsfrei zu erfassen.

Im Bereich von Film- und Fernsehaufnahmen besteht somit die Herausforderung, Kameras flexibel in den unterschiedlichsten Situationen einzusetzen und möglichst nahe an das Geschehen heranzuführen, ohne dass technisch bedingte Störungen wie etwa ruckelnde Kameras vorhanden oder sichtbare technisch bedingte Ausstattungen zur Durchführung einer Aufnahme in einer Aufzeichnung erkennbar sind.

Zur Vermeidung von technischen Störungen, insbesondere um eine besonders hohe Laufruhe der Kamera zu erhalten, hat sich der Einsatz schienengeführter Kamerawagen bewährt. Schienengeführte Systeme haben darüber hinaus den Vorteil, dass reproduzierbar immer wieder eine definierte Einstellung einer Kamera gewählt werden kann. Die Kamerawagen können ferngesteuert werden. Teilweise sitzen die die Kamera bedienenden Kameraleute auf dem Kamerawagen und fahren mit dem Kamerawagen mit.

Der Nachteil an Schienensystemen ist, dass die Montage der Schienen sehr aufwändig ist und der Aktionsbereich der Kamera auf die vorhandenen Schienen beschränkt ist. Kurzfristige Änderungen der Schienenverläufe sind nur schwer umsetzbar, da die Schienen häufig auf Maß gefertigt werden. Das Schienensystem ist somit vergleichsweise unflexibel. Ein weiterer Nachteil des Schienensystems ist, dass die Bereiche, in denen die Schienen angebracht sind, für die vor der Kamera erscheinenden Akteure nur schwer zugänglich sind, insbesondere Stolperfallen darstellen können. Insbesondere für Theater- oder Konzertbühnen ist der Einsatz von Schienensystemen ungeeignet, da sie die Bewegungsfreiheit der Künstler auf den räumlich begrenzten Bühnen stark einschränken.

Insbesondere dort, wo ein sehr flexibler Einsatz eines Kamerasystems gewünscht wird, werden daher fernsteuerbare, frei fahrende Kamerawagen eingesetzt, die über lenkbare Räder verfügen. Fernsteuerbare Kamerawagen weisen zwar eine sehr hohe räumliche Flexibilität auf und lassen den Akteuren sehr viel Bewegungsfreiheit, haben jedoch den Nachteil, dass diese für Kameraleute sehr aufwändig zu steuern sind. Neben der richtigen Kameraeinstellung muss die Person, die die Kamera bedient, auch den Laufweg des Kamerawagens jederzeit exakt steuern. Bei Aufnahmen, die nicht wiederholt werden können, wie etwa Aufnahmen für eine Live-Übertragung, fordert dies sehr viel Erfahrung der Person, die die Kamera bedient bzw. den Kamerawagen steuert. Weiterhin ist es für die Person, die die Kamera bedient, eine sehr hohe Herausforderung, eine Kameraeinstellung an genau dem gleichen Ort zu wiederholen. Unterbrechungen der Aufnahme oder Schnitte werden dadurch recht schwierig.

Es ist daher Aufgabe der Erfindung, einen Kamerawagen bzw. ein Kamerasystem bereitzustellen, welcher/welches für den Kameramann einfach bedienbar ist, so dass er seine Aufmerksamkeit auf die Kameraeinstellung richten kann und welcher/welches nicht störend in den Aktionsraum eingreift, welcher/welches insbesondere keine Stolperfallen für Akteure mit sich bringt, so dass er/es insbesondere für Übertragungen von Veranstaltungen auf Theater- oder Konzertbühnen besonders geeignet ist.

Erfindungsgemäß wird die Aufgabe gelöst durch einen Kamerawagen umfassend eine fahrbare Plattform mit Rädern, eine auf der Plattform montierte Kamera und eine Kommunikationseinheit, wobei die fahrbare Plattform fernsteuerbar ist und wobei ein nach unten weisender Magnetsensor vorgesehen ist, der ausgelegt ist, eine magnetische Spur zu erkennen.

Das Vorsehen eines Magnetsensors führt dazu, dass der Kamerawagen entlang einer auf dem Boden befindlichen magnetischen Spur geführt werden kann und somit für den Kameraführer wie ein auf Schienen geführtes Fahrzeug einfach fernbedienbar ist, ohne dass die aufwändige Anfertigung von Schienen notwendig ist.

Vorzugsweise umfasst die Kommunikationseinheit eine Funkeinheit, so dass die fahrbare Plattform drahtlos fernsteuerbar ist.

Bei einer bevorzugten Ausführungsform ist der Magnetsensor als Sensorbalken ausgebildet und weist wenigstens zwei verschiedene Erfassungsbereiche auf, wobei vorzugsweise der Sensorbalken orthogonal zur Fahrtrichtung ausgerichtet ist und die wenigstens zwei verschiedenen Erfassungsbereiche in Längsrichtung des Sensorbalkens nebeneinander angeordnet sind. Das Vorsehen eines Sensorbalkens mit verschiedenen Erfassungsbereichen ermöglicht eine flexible Steuerung des Kamerawagens, da mittels der unterschiedlichen Erfassungsbereiche unterschiedliche Steuerbefehle erzeugt werden können.

Bautechnisch hat es sich als besonders vorteilhaft erwiesen, dass der Kamerawagen zwei parallel angeordnete Achsen und vier Räder mit einer Lenkvorrichtung aufweist, wobei der Magnetsensor in Fahrtrichtung des Kamerawagens an der Vorder- und/oder Rückseite des Kamerawagens befestigt ist. Bei dieser Anordnung lässt sich eine besonders gute Spurtreue und einfache Steuerbarkeit umsetzen.

Zum Schutz der auf dem Kamerawagen montierten Bauteile ist es von Vorteil, dass der Kamerawagen eine Plattform aufweist, die wenigstens abschnittsweise von dem Schutzrahmen umgeben ist, wobei vorzugsweise der Magnetsensor innerhalb des Schutzrahmens angeordnet ist.

Insbesondere für den Fall, dass der Kamerawagen versehentlich gegen ein Hindernis fährt, sei es ein stationäres Hindernis oder eine Person, ist es von Vorteil, dass der Schutzrahmen zwei Schutzrahmenteile aufweist, wobei jeder Schutzrahmenteil in oder entgegen der Fahrtrichtung verschiebbar gelagert ist. Hierdurch entsteht eine Art Dämpfungswirkung. Verstärkt wird dieser Effekt dadurch, dass beispielsweise ein Dämpfungselement vorgesehen ist, welches zwischen Schutzrahmen und Plattform vorgesehen ist. Das Dämpfungselement wirkt somit als eine Art Stoßdämpfer für den Fall, dass der Kamerawagen gegen ein Hindernis fährt.

Gemäß einer bevorzugten Weiterbildung ist eine Notausschaltung vorgesehen, die beispielsweise aktiviert wird, sobald wenigstens einer der beiden Schutzrahmenteile verschoben wird. Insbesondere ist ein Notaussignalgeber, beispielsweise in Form eines Schalters, vorgesehen, der von dem wenigstens einen verschobenen Schutzrahmenteil ausgelöst wird.

Zur Vermeidung von Zusammenstößen mit Hindernissen ist es von Vorteil, dass an dem Kamerawagen ein Abstandsmesser vorgesehen ist. Erfasst beispielsweise der Abstandsmesser einen Gegenstand auf seiner Fahrbahn, kann ein Nothalt ausgelöst werden, um den Kamerawagen schnellstmöglich zum Stehen zu bringen.

An einem fernsteuerbaren Kamerawagen ist in der Regel eine Vielzahl von elektrischen Geräten vorgesehen, die mit einer Stromversorgung verbunden sind. Zusätzlich zu der Kamera selbst sind als elektrische Geräte, die mit Strom versorgt werden müssen, beispielsweise folgende elektrische Geräte vorgesehen: Sender bzw. Empfänger für die Übertragung von Kameradaten bzw. Steuerungsdaten für die Plattform, Beleuchtungseinheit, Antriebe für den Kamerawagen oder Sensoren, wie etwa oben genannte Abstandssensoren oder Magnetsensoren. In der Regel werden die einzelnen Geräte separat mit einer Batterie versorgt. Es ist von Vorteil, dass nur eine einzige Batterieeinheit vorgesehen ist, wobei vorzugsweise wenigstens ein Spannungswandler vorgesehen ist, wenn die einzelnen Geräte mit unterschiedlichen Spannungen betrieben werden. Dies hat den Vorteil, dass die Kontrolle der Stromversorgung sowie der Austausch von Batterien einfacher durchführbar sind.

Weiterhin ist es von Vorteil, dass eine Batterieeinheit vorgesehen ist, die in Bodennähe des Kamerawagens angeordnet ist. Insbesondere bei Kameras, die höhenverstellbar sind, hat dies den Vorteil, dass der Schwerpunkt des Kamerawagens in Bodennähe liegt, so dass die Gefahr, dass der Kamerawagen einschließlich der Kamera kippt, dadurch reduziert wird.

Bei einer Ausführungsform, bei der eine Vielzahl von ferngesteuerten elektrischen Geräten vorgesehen ist, ist es von Vorteil, dass die Daten der ferngesteuerten elektrischen Geräte über eine einzige Funkverbindung übertragen werden.

Gegenstand der vorliegenden Erfindung ist auch ein Kamerabewegungssystem, umfassend einen Kamerawagen nach einem der vorhergehenden Ansprüche, ein Magnetband und eine Fernsteuerungseinheit.

Die Verwendung eines Magnetbands hat den Vorteil, dass es einfach und schnell auf einem Boden verlegt werden kann.

Das Magnetband weist vorzugsweise zwei übereinander angeordnete Schichten auf, wobei die beiden Schichten eine unterschiedliche magnetische Polarität aufweisen. Ein so ausgebildetes Magnetband ermöglicht eine besonders störungsfreie Führung des Kamerawagens mittels des Magnetsensors.

Bei einer bevorzugten Weiterbildung ist das Magnetband flach und/oder flexibel ausgebildet. Ein flaches Magnetband ist bei geeigneter Farbwahl optisch auf einem Fußboden kaum zu sehen und stellt kein oder nur ein geringes Stolperrisiko für Akteure dar, die sich im Bereich des Magnetbands bewegen. Der Einsatz von Magnetbändern und somit der Einsatz von Kamerabewegungssystemen ist von daher besonderes auf Bühnen geeignet.

Mit Hilfe eines flexiblen Magnetbands lassen sich gekrümmte Spuren bilden, so dass der Kamerawagen entlang gekrümmter Spuren geführt werden kann.

Vorzugsweise bildet das Magnetband eine Spur aus, die wenigstens eine Abzweigung umfasst, so dass die Kamera beispielsweise auf einer Bühne verschiedene Wege fahren kann. Es ist weiter bevorzugt, dass im seitlichen Abstand von dem Magnetband magnetische Marker vorgesehen sind. Diese magnetischen Marker können zur Steuerung des Kamerawagens verwendet werden. Beispielsweise enthalten die Marker Informationen bezüglich der Wegstrecke an Weichen oder Informationen bezüglich der Geschwindigkeit des Kamerawagens.

Bevorzugte Ausführungsformen werden anhand der beigefügten Zeichnungen näher erläutert, in denen zeigen:
- Fig. 1: eine perspektivische Ansicht eines Kamerabewegungssystems,
- Fig. 2: eine Seitenansicht des Kamerawagens,
- Fig. 3: eine Vorderansicht des Kamerawagens,
- Fig. 4: einen Querschnitt durch einen Kamerawagen auf Höhe der Plattform,
- Fig. 5: einen Querschnitt durch ein Magnetband, und
- Fig. 6: eine schematische Darstellung der Funktionsweise des Kamerawagens.

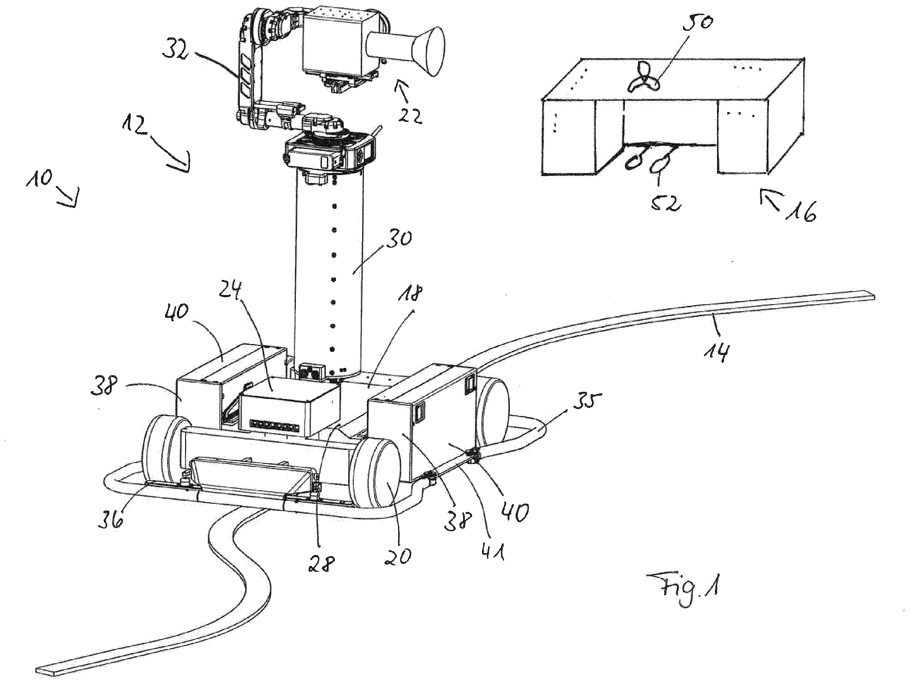

Fig. 1 zeigt ein Kamerabewegungssystem 10 mit einem Kamerawagen 12, einem Magnetband 14 und einer Fernsteuerungseinheit 16 in nicht maßstabsgetreuer Darstellung.

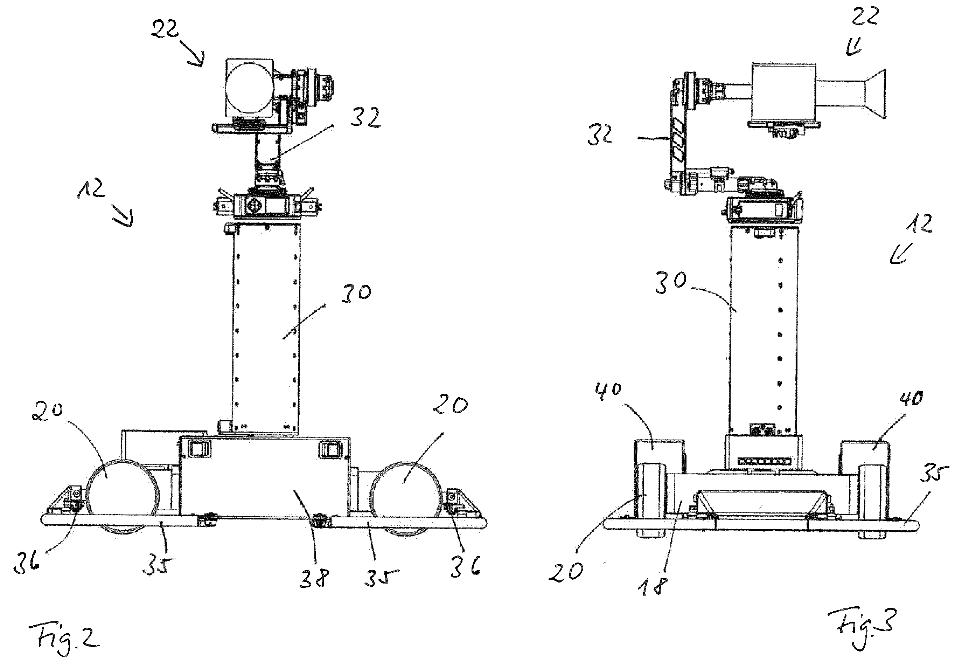

Der auch in den Fig. 2 und 3 dargestellte Kamerawagen 12 umfasst eine fahrbare Plattform 18 mit Rädern 20, eine auf der Plattform 18 montierte Kamera 22 sowie eine Kommunikationseinheit 24 mit einer Funkeinheit, wobei die Funkeinheit über einen Sender als auch einen Empfänger verfügt.

Die fahrbare Plattform 18 wird nach oben durch ein Gehäuse 28 abgedeckt. Die Kamera 22 ist auf einer Hubsäule 30 montiert und somit höhenverstellbar. Weiterhin ist die Kamera 22 mittels eines Remote Heads 32 schwenkbar gelagert.

Die fahrbare Plattform 18 verfügt über einen elektrischen Motor, der nicht sichtbar in dem Gehäuse 28 angeordnet ist, zwei parallel angeordnete Radachsen 34 und vier Räder 20. Weiterhin ist eine nicht dargestellte Lenkvorrichtung vorgesehen, die es ermöglicht, die Plattform 18 auf Kurven zu führen. Im Bereich des unteren Abschnitts der Plattform 18 ist mit Abstand vom Boden ein Schutzrahmen 35 vorgesehen, der die Außenseiten der Plattform 18 umfasst.

An der Vorder- und an der Rückseite der fahrbaren Plattform 18 ist jeweils ein Magnetsensor 36 in Form eines Sensorbalkens vorgesehen. Der Sensorbalken ist parallel zu den Radachsen 34 ausgerichtet und an dem Schutzrahmen 35 befestigt. Der Sensorbalken weist entlang seiner Längsachse fünf verschiedene Erfassungsbereiche auf, die nebeneinander angeordnet sind. Vorzugsweise weist der Sensorbalken wenigstens zwei verschiedene Erfassungsbereiche auf, um neben der Spurführung Steuerungsmöglichkeiten für den Kamerawagen zu haben.

Bei einer nicht dargestellten Ausführungsform ist der Magnetsensor an der Plattform befestigt.

An der Plattform 18 sind taschenartige Halterungen 38 für eine Batterieeinheit 40 vorgesehen. Die taschenartigen Halterungen 38 befinden sich beidseitig an der Längsseite der fahrbaren Plattform 18 zwischen den beiden Radachsen 34 Es handelt sich bei der Batterieeinheit 40 um eine einheitliche Batterieeinheit 40 gleicher Spannung. Die Batterieeinheit 40 besteht aus vier austauschbaren Batteriemodulen.

Die bodennah angebrachte Batterieeinheit 40 versorgt sowohl den elektrischen Motor mit Strom, um den Kamerawagen anzutreiben als auch die elektrischen Geräte, die sich in dem Kamerawagen 12 befinden, wie etwa Kamera 22, Sensoren, Sender, Empfänger, Elektronik und gegebenenfalls zusätzliche Anbauteile.

Da die auf dem Kamerawagen 12 befindlichen elektrischen Geräte in der Regel mit unterschiedlicher Spannung betrieben werden, ist wenigstens ein nicht dargestellter Spannungswandler vorgesehen, um die für ein elektrisches Gerät benötigte Spannung bereitzustellen. Es versteht sich, dass mehrere Spannungswandler vorgesehen sein können, wenn die auf dem Kamerawagen 12 befindlichen elektrischen Geräte unterschiedliche Spannungen benötigen.

An der Vorder- und Rückseite der fahrbaren Plattform sind jeweils Abstandssensoren 42 angebracht. Die Abstandsensoren 42 arbeiten in bekannter Weise auf optischer oder akustischer (Ultraschall) Basis. Die Abstandsensoren 42 können Teil eines Notstopp-Programms sein. Erfassen die Abstandssensoren 42 in Fahrtrichtung des Kamerawagens 12 ein Hindernis, können diese ein Signal für einen Notstopp des Kamerawagens 12 auslösen.

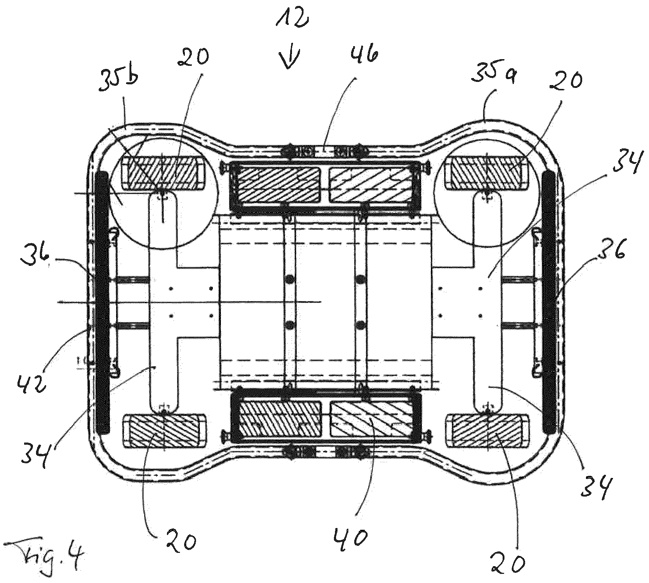

In Fig. 4 ist ein Querschnitt durch den Kamerawagen 12 im Bereich der Plattform 18 gezeigt. Der Schutzrahmen 35 besteht aus einem vorderen Schutzrahmenteil 35a und einem hinteren Schutzrahmenteil 35b, die jeweils den vorderen Teil bzw. den hinteren Teil der fahrbaren Plattform 18 einschließlich Batterieeinheit 40 umfassen, so dass die Plattform 18 im Wesentlichen vollständig seitlich eingefasst ist. Jedes Schutzrahmenteil 35a, 35b ist in Form eines gebogenen Rohrs ausgebildet. Die beiden Schutzrahmenteile 35a, 35b sind an ihren jeweiligen Enden über ein Zwischenstück 41 miteinander verbunden, so dass ein geschlossener Rahmen entsteht.

Das vordere Schutzrahmenteil 35a ist an der Vorderseite und an der Längsseite der Plattform 18 mit dieser verbunden. Entsprechend ist das hintere Schutzrahmenteil 35b an der Rückseite der Plattform 18 und an den Längsseiten der Plattform 18 befestigt. Die Befestigung an der Längsseite kann entweder direkt an der Plattform 18 oder an der an der Plattform 18 befestigten taschenartigen Halterung 38 für die Batteriemodule erfolgen.

Das vordere und das hintere Schutzrahmenteil 35a, 35b sind jeweils bezüglich der Plattform 18 verschiebbar gelagert. In dem von dem Zwischenstück überbrückten Spalt zwischen vorderem und hinterem Schutzrahmenteil 35a, 35b ist ein Dämpfungselement 46 in Form einer Feder sowie ein Notausschalter angeordnet. Hierbei kann das Zwischenstück selbst als Dämpfungselement ausgebildet sein.

Wird der Kamerawagen 12 versehentlich gegen ein Hindernis gefahren, verschiebt sich der Schutzrahmenteil, der mit dem Hindernis zusammenstößt, nach Innen in Richtung der Plattform 18. Das Dämpfungselement 46 wirkt den Kräften des Zusammenstoßes entgegen, so dass der Schutzrahmen 28 möglichst viel Kraft bei einem Zusammenstoß aufnehmen kann, ohne dass dieser Stoß auf die Plattform 18 und somit auf die Kamera 12 selbst übertragen wird. Gleichzeitig wird der nicht dargestellte Notausschalter betätigt, der zu einem sofortigen Stopp des Kamerawagens 12 im Sinne eines Notstopps des Kamerawagens 12 führt.

Bei einer alternativen, nicht dargestellten Ausführungsform sind die beiden Schutzrahmenteile nicht miteinander verbunden. Bei dieser Ausführungsform ist jedes Schutzrahmenteil einzeln mit der Plattform verbunden. Gegebenenfalls können jedem Schutzrahmenteil Dämpfungselemente und/oder Notausschalter zugeordnet sein.

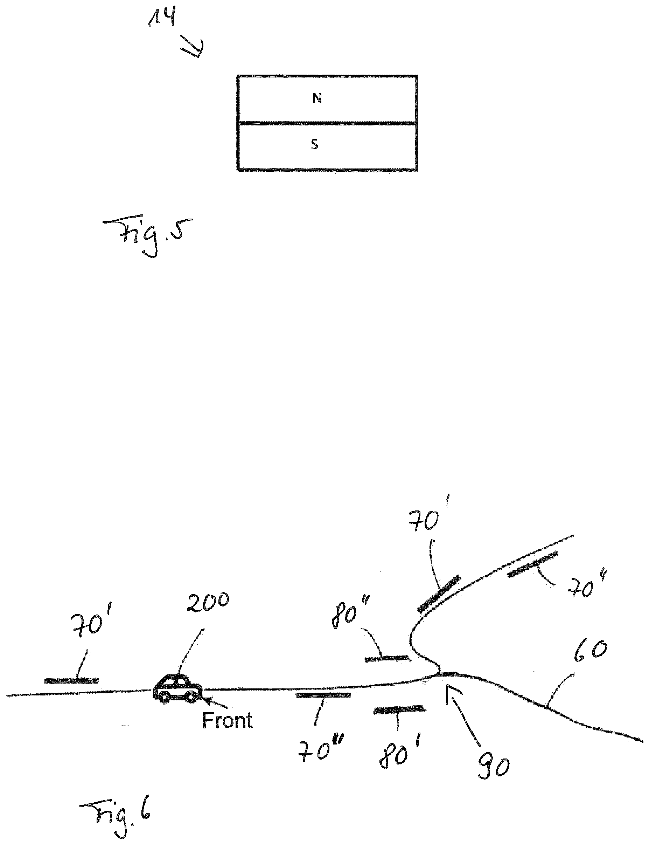

Das in Fig. 1 dargestellte Magnetband 14 besteht, wie in Fig. 5 zu erkennen ist, aus zwei übereinander angeordneten magnetischen Lagen, so dass entweder der Nordpol oder der Südpol auf der Oberseite des Magnetbands ist. Das Magnetband 14 selbst ist sehr flach ausgebildet und flexibel und verfügt über eine Klebeschicht an seiner Unterseite, so dass es auf dem Boden verklebt werden kann. Es versteht sich, dass bei einem nicht dargestellten Magnetband der Nordpol unten und der Südpol oben angeordnet sein können.

Die Fernsteuerung des Kamerawagens 12 erfolgt mittels der Fernsteuerungseinheit 16, die beispielsweise ein Handgerät, wie etwa einen Joystick 50, sowie Pedale 52 umfasst. Mittels der Fernsteuerungseinheit 16 wird sowohl der Fahrweg des Kamerawagens 12 entlang des Magnetbands 14 gesteuert als auch die Kamera 22 selbst. Beispielsweise können mittels der Fernsteuerung die Höhe der Kamera 22 sowie der Winkel der Kamera 22 eingestellt werden. Weiterhin ist es möglich, sämtliche kamerabezogenen technischen Parameter mittels der Fernsteuerungseinheit 16 einzustellen.

Die Übertragung sämtlicher Daten zur Steuerung des Fahrwegs des Kamerawagens 12 und der der Kamera 22 selbst erfolgen über eine einzige Funkverbindung zwischen Kamerawagen 12 und Fernsteuerungseinheit 16. Grundlage dieser einzigen Funkverbindung kann beispielsweise ein VLAN Netzwerk sein.

In Fig. 6 ist die Funktionsweise des Kamerawagens 12 gezeigt.

Auf dem Boden befindet sich eine kontinuierliche Magnetspur 60, die aus dem Magnetband 14 gebildet wurde, indem das Magnetband 14 auf dem Boden aufgeklebt wurde. Der Sensorbalken weist wie oben bereits angeführt fünf verschiedene Erfassungsbereiche auf, die nebeneinander angeordnet sind. Der mittlere Bereich des Sensorbalkens erfasst die zentrale, auf dem Boden aufgeklebte Magnetspur 60, so dass der Kamerawagen 200 entlang dieser Magnetspur 60 geführt werden kann. Mittels der Fernsteuereinheit 16 lässt sich der Kamerawagen 200 beispielsweise mit unterschiedlichen Geschwindigkeiten entlang der Magnetspur 60 fahren.

Mit Hilfe von magnetischen Markern 70, die in vorgegebenem Abstand von der Magnetspur 60, seitlich neben der Magnetspur 60 angeordnet sind, können verschiedene Geschwindigkeitsprofile des Kamerawagens 200 voreingestellt werden. Die Marker 70 selbst sind ebenfalls magnetisch und beispielsweise ein kurzer Streifen eines Magnetbandes, welches den gleichen Aufbau aufweist wie das Magnetband, aus dem die Magnetspur 60 gebildet wurde. Die Marker 70 sind jedoch mit umgekehrter Polarität zu der Magnetspur auf dem Boden angebracht, insbesondere verklebt.

So kann beispielsweise ein auf einer Seite der Magnetspur 60 in einem vorgegebenen Abstand von der Magnetspur 60 angeordneter magnetischer Marker 70' ein Signal auslösen, eine Geschwindigkeit zu reduzieren. Ein anderer Marker 70", der auf der anderen Seite der Magnetspur 60 angeordnet ist, kann beispielsweise eine Geschwindigkeitserhöhung bewirken. Marker 70', 70", die die Geschwindigkeit reduzieren, sind insbesondere dann sinnvoll, wenn der Kamerawagen 200 um eine Kurve geführt werden soll oder sich einem Endpunkt, beispielsweise einer Wand, nähert.

Magnetische Marker 80' 80" sind auch als Weichen einsetzbar, um den Kamerawagen 200 entlang verschiedener Wege zu führen. So kann ein rechtsseitig angebrachter Marker 80' an einer Abzweigung 90 dazu führen, dass der Kamerawagen 200 auf der rechten Spur geführt wird und ein linksseitig angebrachter Marker 80", dass die linke Magnetspur einer Abzweigung 90 befahren wird.

Wenn auch nicht dargestellt, so sind mit Hilfe der Fernsteuerungseinheit 16 auch 3-Wege Weichen möglich. Hierbei kann mittels der Fernsteuerungseinheit 16 eine Vorwahl der zu fahrenden Strecke getroffen werden.

Bei einer Kombination der Marker 70', 70" zur Steuerung der Geschwindigkeit mit Markern 80', 80" zur Auswahl einer Wegstrecke sollten die Marker 70', 70", 80', 80" mit unterschiedlichem Abstand von der zentralen Magnetspur 60 angeordnet sein, damit die Marker 70', 70", 80', 80" von den einzelnen Erfassungsbereichen des Sensorbalkens erkannt werden. Es spielt keine Rolle, in welchem Abstand ein Marker für eine bestimmte Funktion von der zentralen Magnetspur 60 angeordnet ist. Entscheidend ist, dass jeder Marker, dem eine Funktion zugeordnet ist, in einem vorgegebenen Abstand von der zentralen Magnetspur angeordnet ist. Die zentrale Magnetspur muss auch nicht zwangsweise dem mittleren Erfassungsbereich zugeordnet sein.

Wenn auch nicht dargestellt, so kann die Bewegung des Kamerawagens, insbesondere die Plattform auch über eine Kabelverbindung ferngesteuert werden.

Wenn die wesentlichen Merkmale der Erfindung auch anhand einer konkreten Ausführungsform dargestellt wurden, können im Rahmen der Erfindung auch Merkmale weggelassen oder in anderer Form kombiniert werden.

## Patentansprüche

1. Kamerawagen, umfassend eine fahrbare Plattform (18) mit Rädern (20), eine auf der Plattform (18) montierte Kamera (22) und eine Kommunikationseinheit (24), wobei die fahrbare Plattform (18) fernsteuerbar ist und wobei ein nach unten weisender Magnetsensor (36) vorgesehen ist, der ausgelegt ist, eine magnetische Spur zu erkennen.

2. Kamerawagen nach Anspruch 1, **dadurch gekennzeichnet, dass** die Kommunikationseinheit (24) eine Funkeinheit umfasst.

3. Kamerawagen nach einem der vorhergehenden Ansprüche, **dadurch gekennzeichnet, dass** der Magnetsensor (36) als Sensorbalken ausgebildet ist und wenigstens zwei verschiedene Erfassungsbereiche aufweist, wobei vorzugsweise der Sensorbalken orthogonal zur Fahrtrichtung des Kamerawagens ausgerichtet ist und die wenigstens zwei verschiedenen Erfassungsbereiche in Längsrichtung des Sensorbalkens nebeneinander angeordnet sind.

4. Kamerawagen nach einem der vorhergehenden Ansprüche, **dadurch gekennzeichnet, dass** die fahrbare Plattform (18) zwei parallel angeordnete Achsen und vier Räder (20) mit einer Lenkvorrichtung aufweist, wobei der Magnetsensor (36) in Fahrtrichtung des Kamerawagens (12; 200) an der Vorder- und/oder Rückseite des Kamerawagens (12; 200) befestigt ist.

5. Kamerawagen nach einem der vorhergehenden Ansprüche, **dadurch gekennzeichnet, dass** die fahrbare Plattform (18) wenigstens abschnittsweise von einem Schutzrahmen (35) umgeben ist, wobei vorzugsweise der Magnetsensor (36) innerhalb des Schutzrahmens (35) angeordnet ist.

6. Kamerawagen nach einem der vorhergehenden Ansprüche, **dadurch gekennzeichnet, dass** der Schutzrahmen (35) zwei Schutzrahmenteile (35a, 35b) aufweist, wobei jedes Schutzrahmenteil (35a, 35b) in oder entgegen der Fahrtrichtung des Kamerawagens (12; 200) verschiebbar gelagert ist.

7. Kamerawagen nach einem der vorhergehenden Ansprüche, **dadurch gekennzeichnet, dass** eine Notausschaltung vorgesehen ist.

8. Kamerawagen nach einem der vorhergehenden Ansprüche, **dadurch gekennzeichnet, dass** an der fahrbaren Plattform (18) ein Abstandsmesser (42) vorgesehen ist.

9. Kamerawagen nach einem der vorhergehenden Ansprüche, **dadurch gekennzeichnet, dass** eine Vielzahl von elektrischen Geräten vorgesehen sind, die mittels einer einzigen Batterieeinheit (40) versorgt werden, wobei vorzugsweise wenigstens ein Spannungswandler vorgesehen ist.

10. Kamerawagen nach einem der vorhergehenden Ansprüche, **dadurch gekennzeichnet, dass** eine Batterieeinheit (40) vorgesehen ist, die in Bodennähe des Kamerawagens (12) angeordnet ist.

11. Kamerawagen nach einem der Ansprüche 2 bis 10, **dadurch gekennzeichnet, dass** eine Vielzahl von ferngesteuerten elektrischen Geräten vorgesehen sind, wobei die Daten der ferngesteuerten elektrischen Geräte über eine einzige Funkverbindung übertragen werden.

12. Kamerabewegungssystem umfassend einen Kamerawagen nach einem der vorhergehenden Ansprüche, ein Magnetband (14) und eine Fernsteuerungseinheit (16).

13. Kamerabewegungssystem nach Anspruch 12, **dadurch gekennzeichnet dass** das Magnetband (14) zwei übereinander angeordnete Schichten aufweist, wobei die beiden Schichten eine unterschiedliche magnetische Polarität aufweisen.

14. Kamerabewegungssystem nach einem der Ansprüche 12 oder 13, **dadurch gekennzeichnet, dass** das Magnetband (14) flach und/oder flexibel ist.

15. Kamerabewegungssystem nach einem der Ansprüche 12 bis 14, **dadurch gekennzeichnet dass** das Magnetband (14) eine Spur (60) ausbildet, die wenigstens eine Abzweigung (90) umfasst.

16. Kamerabewegungssystem nach einem der Ansprüche 12 bis 15, **dadurch gekennzeichnet dass** im seitlichen Abstand von dem Magnetband (14) magnetische Marker (70', 70", 80', 80") vorgesehen sind, wobei der Marker (70', 70", 80', 80") vorzugsweise Informationen bezüglich der Wegstrecke oder der Geschwindigkeit enthält.
